# EUROPEAN PATENT SPECIFICATION

(11) **EP 2 937 259 B1**
(45) Date of publication and mention of the grant of the patent: **22.11.2017**
(21) Application number: 12890249.1
(22) Date of filing: 19.12.2012
(51) Int. Cl.: B61L 3/12, B60L 15/40, B61L 23/14, B61L 27/00, B60L 9/00

(54) **TRAIN CONTROL DEVICE, AND TRAIN CONTROL METHOD**
ZUGSTEUERUNGSVORRICHTUNG UND ZUGSTEUERUNGSVERFAHREN
DISPOSITIF DE COMMANDE DE TRAIN, ET PROCÉDÉ DE COMMANDE DE TRAIN

(43) Date of publication of application: 28.10.2015
(73) Proprietor: Kabushiki Kaisha Toshiba, Minato-ku Tokyo 105-8001 (JP)
(72) Inventor: YAMAMOTO, Junko, Tokyo 105-8001 (JP); SATO, Shuji, Tokyo 105-8001 (JP); SAKATA, Ren, Tokyo 105-8001 (JP); OKIMOTO, Yuichi, Tokyo 105-8001 (JP); SAKAMOTO, Keiji, Tokyo 105-8001 (JP); SUZUKI, Mitsuaki, Tokyo 105-8001 (JP); OKADA, Tetsuya, Tokyo 105-8001 (JP)
(74) Representative: Awapatent AB
(86) International application number: PCT/JP2012/008097
(87) International publication number: WO 2014/097349

(56) References cited:
- GB-A- 2 480 568
- JP-A- H08 207 769
- JP-A- 2003 276 606
- JP-A- 2004 338 674
- JP-A- 2006 256 545
- JP-A- 2006 256 545
- JP-A- 2011 029 930
- JP-A- 2013 023 037

## Description

The present invention relates to a train control system and a train control method.

### BACKGROUND ART

A train control system which notifies a train location detected by a train itself to a ground-side control device by wireless can set a stop limit position of the train with a higher resolution than a security function using a track circuit of a current situation. Thus, it is expected to obtain the effect that can reduce a train operation interval by the moving block. In addition, while the track circuit needs a lot of complicated interconnections, less ground facilities are required. Furthermore, a reduction in facility costs is expected.

However, in a method using radio communication, a radio communication disabled section may occur in a mountainous area or the like. A position of a vehicle that resides in that section cannot be detected at the ground side, and a stop limit position cannot be notified to the train. Hence, the operation of the train is interrupted on both sides of this section.

Therefore, there is proposed a method that previously registers radio communication disabled sections such as mountainous areas, and regards the radio communication disabled sections as fixed block sections by adding communication enabled sections on both sides thereof. And a motorman is navigated by performing virtual signal indication according to an interval from a preceding train, and a fixed block section is set by including radio communication enabled sections on both sides of the radio communication disabled section. Furthermore, in a case where the preceding train resides in the fixed block section, a target train is stopped within the first radio communication enabled section of the fixed block section, by indicating a deceleration signal when the target train approaches the fixed block section, and indicating a stop signal when the target train reaches the fixed block section.

A document related to the above-described technology is shown in the following, and the entire contents thereof are incorporated herein by reference.

### PRIOR ART DOCUMNET

### PATENT DOCUMENT

Patent Document 1: Japanese Patent Appliction Publication No. 2006-256545

### SUMMARY OF THE INVENTION

### PROBLEM TO BE SOLVED BY THE INVENTION

As another case where a radio communication disabled section occurs, it may be considered that a radio communication disabled section occurs due to a device malfunction of a base station or the like. In such a case, it is impossible to previously register the radio communication disabled section, and it is also impossible to navigate the motorman. Thus, in a case where a preceding train is in the first radio communication enabled section of the fixed block section, the preceding train may be rear-ended by the target train.

Therefore, in the present invention, there is provided a train control system that can ensure safety even when a radio communication disabled section occurs. Alternatively, there is provided a train control system that enables traveling in this section so that the operation of a train is not interrupted.

### MEANS FOR SOLVING THE PROBLEM

The present invention is defined by the features of the independent claims.

In a train control system which performs radio communication between an on-board control device installed in a vehicle and a ground control device mounted on a ground, the train control system is charactrised by comprising fixed block section setting means that sets a section obtained by adding a safe deceleration control distance necessary for stopping, to a radio communication disrupted section in which radio communication is disrupted at an end, as a fixed block section, stop limit position setting means that sets a position rearward (upstream side) by a margin distance from an end of the fixed block section, for a train entering the fixed block section, as a stop limit position on the end side of the fixed block section, and control means that controls the train, based on the fixed block section and the stop limit position.

Further, in a train control method, which performs radio communication between an on-board control device installed in a vehicle and a ground control device mounted on a ground, the train control method is characterized by comprising setting a section obtained by adding a safe deceleration control distance necessary for stopping, to a radio communication disrupted section in which radio communication is disrupted at an end, as a fixed block section, and setting a position rearward (upstream side) by a margin distance from an end of the fixed block section, for a train entering the fixed block section, as a stop limit position on the end side of the fixed block section.

### BRIEF DESCRIPTION OF THE DRAWINGS

[Fig. 1] is a diagram illustrating a representative whole configuration of a train control system to which a train control system is applied.
[Fig. 2] is a diagram illustrated for describing an operation example of the train control system when a radio communication disrupted section occurs in the train control system of Fig. 1, and is also a state diagram of data image grasped by the ground control device.
[Fig. 3A] is a diagram for describing an example of a setting method of a stop limit position of a train when a radio communication disrupted section occurs in the train control system of Fig. 1, and is also a state diagram of image by data grasped by the ground control device.
[Fig. 3B] is a diagram for describing an example of a setting method of the stop limit position of a train till radio communication is recovered, when a train is over a fixed block section and the radio communication is disrupted in the train control system of Fig. 1, and is also a state diagram of image by data grasped by the ground control device.
[Fig. 3C] is a diagram for describing an example of a case in which a stop limit position of a subsequent train is set till radio communication is recovered, when a train is over a fixed block section and the radio communication is disrupted in the train control system of Fig. 1, and is also a state diagram of image by data grasped by the ground control device.
[Fig. 3D] is a diagram for describing an operation example of a case in which communication between a train running in the radio communication disrupted section and the ground control device is recovered in the train control system of Fig. 1, and is also a state diagram of image by data grasped by the ground control device.
[Fig. 3E] is a diagram for describing an operation example of a case in which communication between a train running in the radio communication disrupted section and the ground control device is recovered in the train control system of Fig. 1, and is also a state diagram of image by data grasped by the ground control device.
[Fig. 3F] is a diagram illustrating a situation of a case in which a train has passed through a fixed block section in the train control system of Fig. 1, and is also a state diagram of image by data grasped by the ground control device.
[Fig. 4A] is a diagram for describing an operation example of the ground control means at the time of temporarily setting the start and end of the radio communication disrupted section in the train control system of Fig. 1, and is also a state diagram of image by data grasped by the ground control device.
[Fig. 4B] is a diagram for describing an operation example of the ground control means at the time of correcting the start and end of the radio communication disrupted section illustrated in Fig. 4A, and is also a state diagram of image by data grasped by the ground control device.
[Fig. 4C] is a diagram for describing a further operation example of the ground control means at the time of making a first train enter in the section, after the correction of the radio communication disrupted section described in Fig. 4B is finished, and is also a state diagram of image by data grasped by the ground control device.
[Fig. 4D] is a diagram for describing a further operation example of the ground control means after making the first train enter in the section, after the correction of the radio communication disrupted section described in Fig. 4B is finished, and is also a state diagram of image by data grasped by the ground control device.
[Fig. 4E] is a diagram illustrating a still further operation example of the ground control means after making the first train enter in the section, after the correction of the radio communication disrupted section described in Fig. 4B is finished, and is also a state diagram of image by data grasped by the ground control device.
[Fig. 5] is a diagram for describing another example that automatically sets the radio communication disrupted section in the train control system of Fig. 1, and is also a state diagram of image by data grasped by the ground control device.
[Fig. 6] is a diagram for describing still another example that automatically sets the radio communication disrupted section in the train control system of Fig. 1, and is also a state diagram of image by data grasped by the ground control device.
[Fig. 7] is a flow chart illustrating a schematic processing procedure used in the ground control means 14n, when the ground control means 14n has detected the malfunction of the ground radio communication means.

### EMBODIMENT TO PRACTICE THE INVENTION

Hereinafter, examples will be described with reference to the drawings. According to the examples in a train control system which notifies a train on-rail position from a train to a ground by wireless, even when a radio communication disabled section occurs, traveling in the section is enabled while safety is ensured, so that the operation of the train is not interrupted.

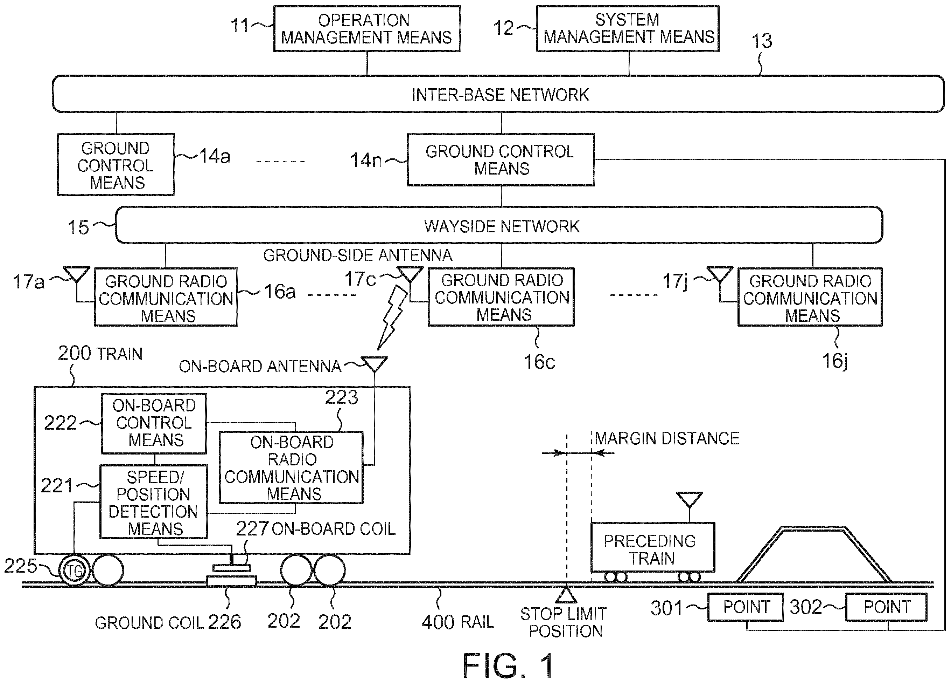

Hereinafter, a train control system will be described with reference to Fig. 1. Fig. 1 is a configuration diagram illustrating a train control system according to an embodiment. A train control system is a system that controls a traveling condition of a train in such a manner that a ground control device installed on the ground and an on-board control device mounted on the train transmit and receive information by radio communication.

The ground control device includes various devices installed on the ground. The ground control device is a system that can communicate with the train to be controlled during traveling on a route. The ground control device manages the operation of each train based on an operation schedule, an operation situation of each train, or the like.

The on-board control device includes various devices installed in the train. The on-board control device performs various controls, such as a train speed and a brake, based on a command received from the ground control device. In addition, the on-board control device has a function for providing the ground control device with a variety of information, such as a train speed or a train position, during traveling.

In the same drawing, operation management means 11, system management means 12, ground control means 14a to 14n, ground radio communication means 16a to 16j, and antennas 17a to 17j, which are included in the ground control device, are installed on the ground side. Speed/position detection means 221, on-board control means 222, and on-board radio communication means 223 are installed in a vehicle of a train 200.

Furthermore, the operation management means 11 and the system management means 12 are connected to an inter-base network 13, and a plurality of the ground control means 14a to 14n are connected to the inter-base network 13. Each of the ground control means 14a to 14n is connected to a wayside network corresponding thereto. A relationship between the ground control means 14n and a wayside network 15 is illustrated in the drawing. The ground radio communication means 16a to 16j, which are mainly managed by the ground control means 14n, are connected to the wayside network 15.

The inter-base network 13 is used for transmitting and receiving data between the ground control means 14a to 14n, or between the ground control means 14a to 14n and the operation management means 11. The wayside network 15 connects the ground control means 14n and the plurality of ground radio communication means 16a, 16c, 16j.

In addition, the ground control means can be performed in, for example, a base device, a node, a server, or the like. In addition, the ground control means is not limited thereto. Furthermore, the operation management means can be performed in a main server, a main center, or the like, but is not limited thereto. In addition, the ground radio means can be performed in a radio base station, a repeater, or an access point, but is not limited thereto. In addition, the on-board control device is not limited to the above-described configuration, and some functions thereof can be performed in the ground control device. Furthermore, conversely, some functions of the ground control device side can be performed in the on-board control device.

A jurisdictional area is allocated to the ground control means 14n connected to the wayside network 15 through the ground radio communication means 16a, 16c, 16j. Therefore, an entire communication area for a train to be controlled is spatially divided by the jurisdictional areas of the plurality of ground control means 14a to 14n. The wayside network 15 is a network that the ground control means 14n can use for performing radio communication with the on-board control device of the train within its own jurisdictional area.

The train 200 travels on a rail 400, while a plurality of wheels 202 are driven/braked by a driving/braking device (not illustrated), based on a power running/brake command input by a motorman, an automatic train operation device (ATO), or the like.

The speed/position detection means 221 counts the number of pulses from a tachogenerator (TG) 225, and detects a speed based on a wheel diameter and the number of teeth of the tachogenerator (TG) 225. In addition, it is not necessary that the means to acquire the speed signal is limited to the tachogenerator (TG) 225, and the means may use another means such as a pulse generator (PG).

Furthermore, the speed/position detection means 221 calculates a moving distance by integrating the number of pulses from the tachogenerator (TG) 225 or the detected speed, and in addition, corrects the position information of the own train, based on the position information received from a ground coil 226 through an on-board coil 227. The speed/position detection means 221 may correct the position information of the own train, based on a ground coil installation position information read from a database (not illustrated) based on ground coil identification information received from the ground coil 226 through the on-board coil 227.

The detected position information of the own train is transmitted to the ground control means 14n through the on-board radio communication means 223, and the ground radio communication means 16c, for example.

The operation management means 11 performs a route setting request to the ground control means 14a to 14n, based on a train operation diagram or a train operation situation.

The ground control means 14n performs a conversion or a lock of points 301 and 302 by issuing a command to the points 301 and 302, based on the route setting request, and detects a route opening situation.

The route setting request can be performed from the operation management means 11 to an interlocking device (not illustrated), the interlocking device may perform control of the points 301 and 302, and thereby the ground control means 14n detects the route opening situation through the interlocking device.

The ground control means 14n obtains an obstacle position as a leading end position of a progression-possible range of each train from the route opening situation and the position of the train 200, and sets a position that is a margin distance short of the leading end position by considering a detection error of the train position information or the like, as a stop limit position, and transmits the stop limit position to the on-board control device, through the ground radio communication means 16c and the on-board radio communication means 223. In addition, the on-board control device includes devices installed in the train, such as the speed/position detection means 221, the on-board control means 222, the on-board radio communication means 223, the braking device (not illustrated), and the like. The speed/position detection means 221, the on-board control means 22, the on-board radio communication means 223, and the like are not limited to their names, and may be referred to as a speed/position detector, an on-board control device, and an on-board radio communication device.

The on-board control device can issue a brake command to the braking device of the train, so that the train does not overrun the stop limit position transferred from the ground control device.

### <Radio Communication Disrupted Section>

Here, when the ground radio communication means 16c cannot perform communication due to malfunction or the like, a radio communication disrupted section occurs.

<Emergency Stop> In a state in which radio communication is disrupted, since the train position cannot be notified from the train to the ground, and the stop limit position cannot be notified from the ground to the train, the train of which the radio communication has been disrupted is automatically emergently stopped, in order to ensure safety. In addition, the ground control device may emergently stop a subsequent train according to a situation.

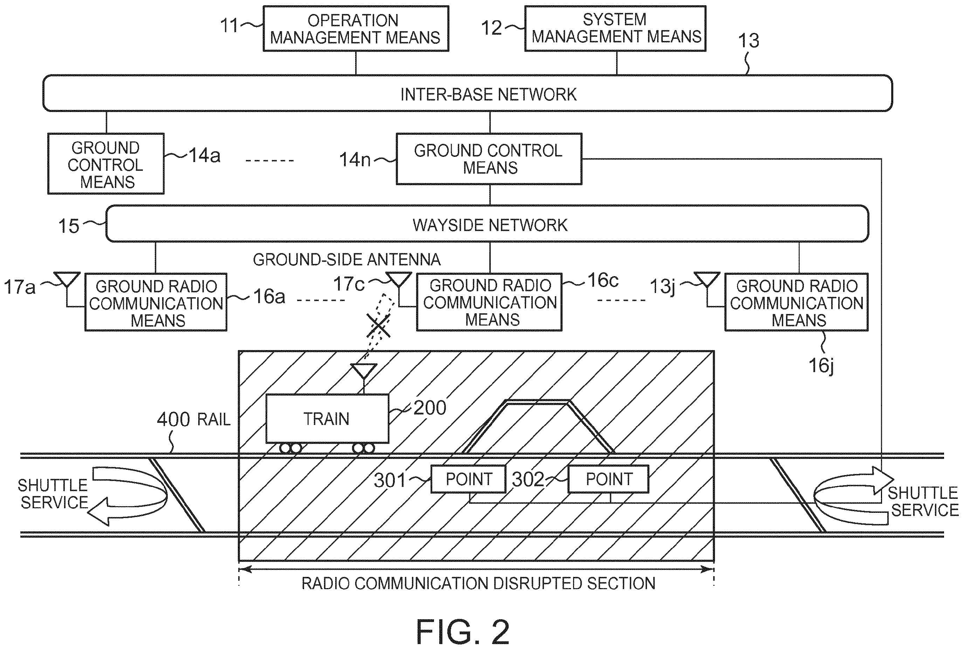

<Visual Operation> For example, a motorman operates a button provided in a cab according to an instruction of a ground staff, to perform a transition to a radio disruption allowance mode that allows traveling even when an emergency stop factor is not resolved. In the radio disruption allowance mode, the traveling of the train is performed by the operation of the motorman, and the on-board control device performs a brake control so as not to exceed a speed limit set with intention of ensuring safety. After that, between the completion of evacuation of the train from the area where the disruption of the radio communication occurred by a manual visual operation and the restart of the readio communication by the ground radio communication means 16c, a shuttle service is performed on both sides of the radio communication disrupted section, as illustrated in Fig. 2. Thereby the train operation is interrupted on the both sides of the same section. At this time, in order to prevent the train from going into the radio communication disrupted section, the stop limit position in which the start position of the disrupted section is set as the obstacle position is notified to the target train.

### <Method for Realizing Continuous Operation that is Next step>

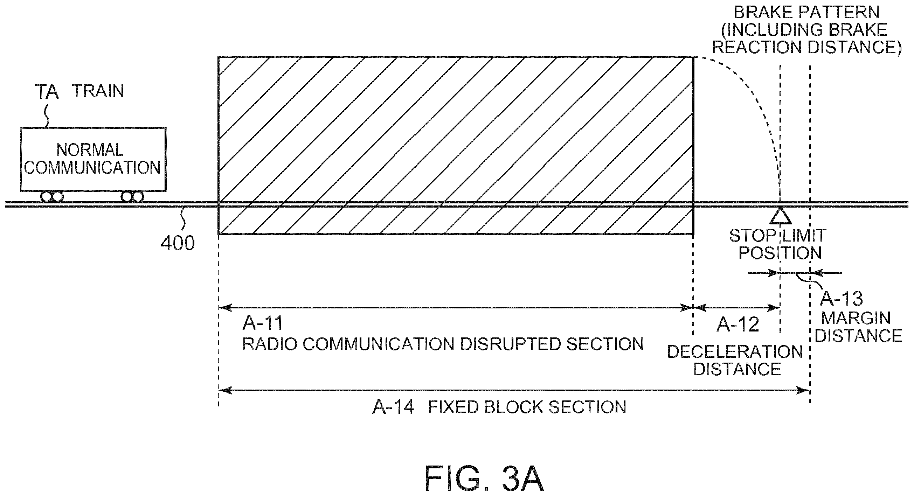

Next, a specific train control operation of the train control system will be described with reference to Figs. 3A to 3F. Figs. 3A to 3F are diagrams for describing the operation example of the train control system, and are state diagrams of data images grasped by the ground control device.

First, the ground control device sets a section from the start of a radio communication disrupted section A-11 to the end of a margin distance A-13, as a fixed block section A-14. Here, the section is obtained by adding a deceleration distance A-12 necessary for the train to safely stop, and the margin distance A-13 in which the detection error of train position information or the like is anticipated, at the end of the radio communication disrupted section A-11 of the ground radio communication means of which the radio communication is disrupted (Fig. 3A).

That is, a distance necessary to stop by braking is referred to as the deceleration distance A-12, and a distance provided for margin necessary in terms of safety management is referred to as the margin distance A-13. The deceleration distance A-12 may be obtained by calculating a standard distance necessary for deceleration from a speed or the like, or may be previously stored in a table or the like and may be calculated therefrom. In addition, here, the distance in which the deceleration distance A-12 and the margin distance A-13 are added is referred to as a safe deceleration control distance.

The description is given using the deceleration distance A-1 necessary to stop by braking. However, a distance in which the length of the vehicle and the margin distance A-13 are added, using a length of the vehicle instead of the deceleration distance A-1, may be made as the safe deceleration control distance. In addition, in place of the length of the vehicle, other distances may be alternatively used as long as safety can be ensured.

Next, the ground control device sets a stop limit position that is the margin distance short of the end of the fixed block section A-14, with respect to a train TA positioned more rearward (upstream side) than the fixed block section A-14, and transmits the range of the fixed block section and the stop limit position to the train TA (Fig. 3A). In addition, at this time, the ground control device instructs a transition to a radio disruption allowance mode that allows traveling in the section in which the radio communication is disrupted.

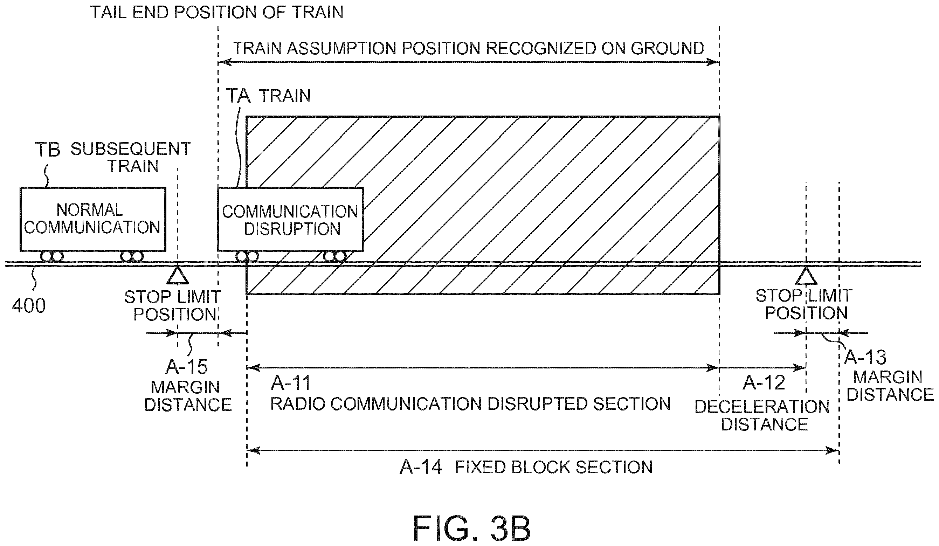

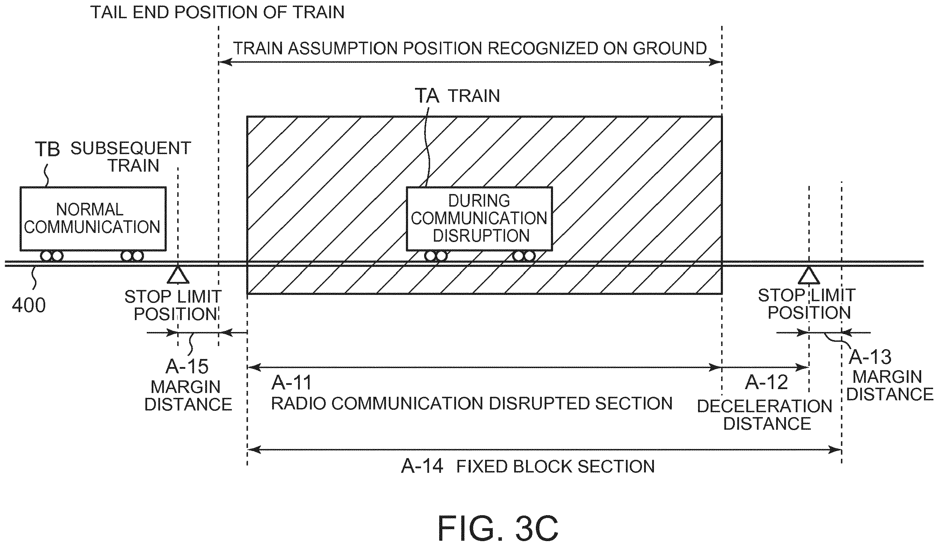

The train TA enters the fixed block section A-14 and the radio communication is disrupted (Fig. 3B). After that, the train TA holds the stop limit position received just before the communication disruption, and continues to travel until the radio communication is recovered (state of Fig. 3C).

The ground control device holds a train tail end position received just before the communication disruption as the position information of the train TA, and sets an end position of the radio communication disrupted section as a train front position. In this way, a train assumption position is set (states of Fig. 3B, Fig. 3C).

The ground control device holds the stop limit position with respect to the train TA.

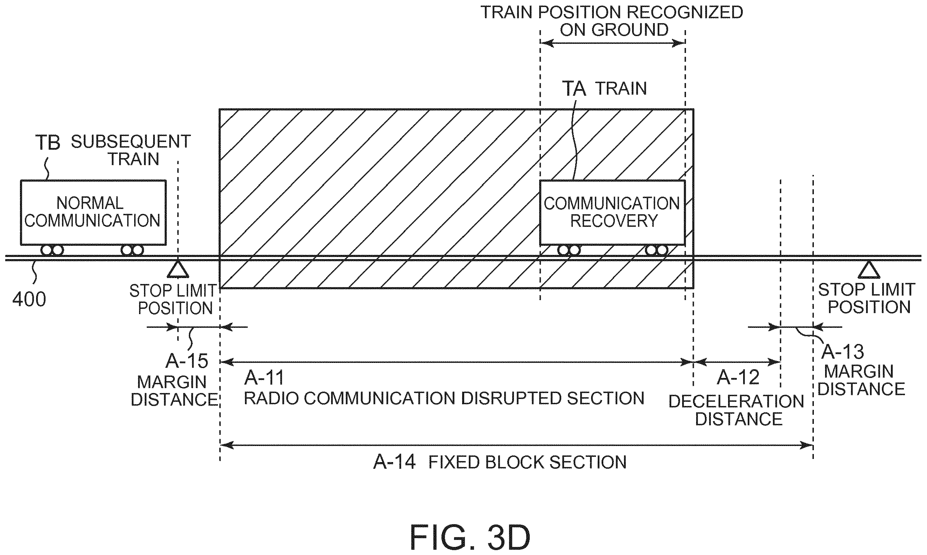

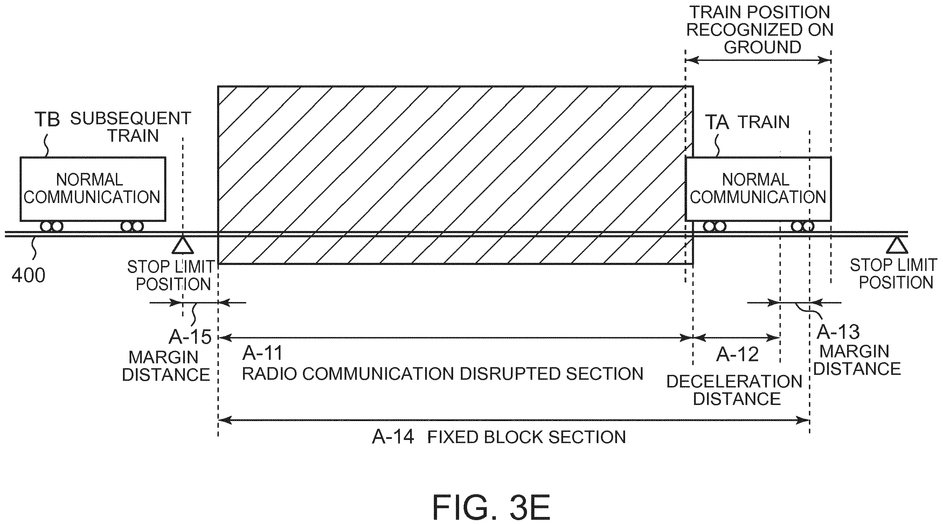

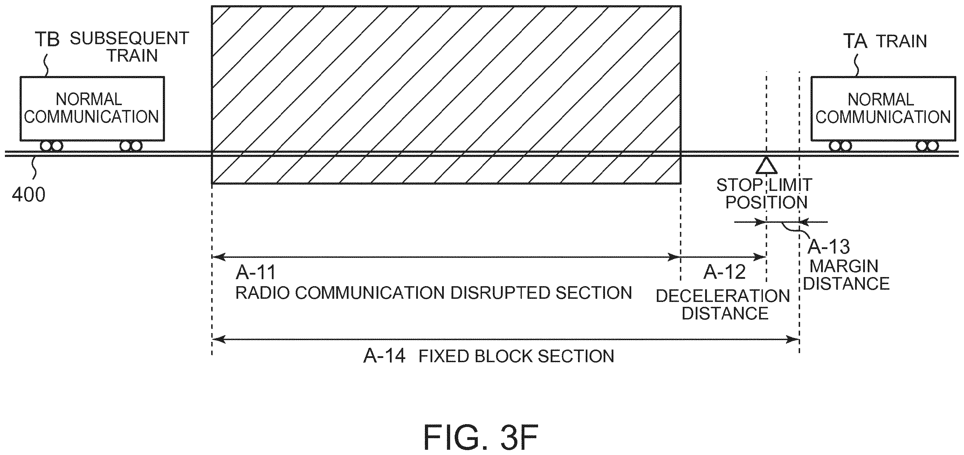

When the train TA proceeds to the end of the radio communication disrupted section and the radio communication is recovered (states of Fig. 3D, Fig. 3E, Fig. 3F), a transition occurs from the set radio disruption allowance mode to a normal control mode. After that, the ground control device performs position recognition or calculation of the stop limit position with respect to the train TA using a usual method. That is, the ground control means adopts the train position transmitted from the train. In addition, according to a route opening situation or a position of a preceding train relative to the train TA, the stop limit position of the train TA is calculated and transmitted.

The condition of Fig. 3E shows an aspect in which the train TA passes through the radio disrupted section A-11, and the stop limit position is corrected according to the train position of the current situation. The condition of Fig. 3F shows a state in which the train TA passes through the fixed block section A-14 and a subsequent train TB is allowed to travel to the fixed block section A-14.

In addition, while all or part of the train TA resides in the fixed block section A-14, the ground control device sets the stop limit position, with respect to the train TB which follows the train TA, and transmits the stop limit position to the train TB (states of Fig. 3B, Fig. 3C, Fig. 3D). Here the stop limit position is a position that is a margin distance A-15 short of a more rearward one, out of the start of the fixed block section, and the tail end position of the train TA (recognition value). In addition, retreat prohibition control is performed on the train that is traveling through the fixed block section.

Therefore, according to the train control system, after the section in which the radio communication is disrupted occurs due to the malfunction of the ground radio communication means or the like, and the train that is in the radio communication disrupted section is evacuated, and till the ground radio communication means is recovered and the radio communication is enabled again, it is possible not to interrupt the train operation on both sides of the radio communication disrupted section, while safety is ensured,.

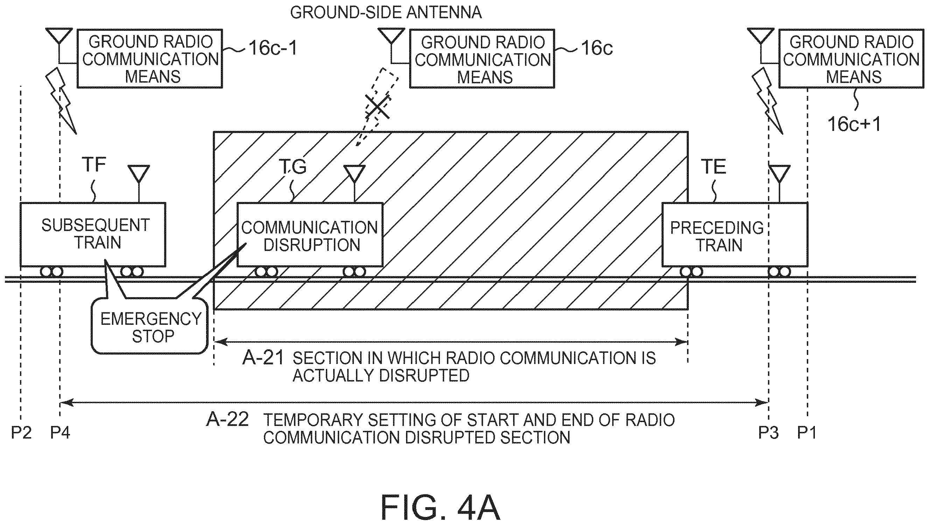

In the train control system, a procedure of automatically setting the start and end positions of the radio communication disrupted section will be described with reference to Fig. 4A to Fig. 4E.

(Procedure 1) First, in Fig. 4A, when the disruption of the radio communication occurs, a front position P1 of a rearmost train TE among the preceding trains continuing the radio communication is extracted. In addition, when a leading train TF among the subsequent trains continuing the radio communication emergently stops, a tail end position P2 is extracted (in a case where the train enters the radio communication disrupted section before stop and the radio communication is disrupted, a tail end position at the time of disruption is extracted).

A position P3 of the adjacent normal ground radio communication means at the downstream side, and a position P4 of the adjacent normal ground radio communication means at the upstream side are extracted. Here, the position P3 is an antenna position of the ground radio means adjacent to the downstream of the ground radio means (seem to be in malfunction), and the position P4 is an antenna position of the ground radio means adjacent to the upstream of the ground radio means, for example.

Next, the position that is more rearward (upstream side) out of the positions P1 and P3 is temporarily set to an end position of a radio communication disrupted section A-22, and the position that is more forward (upstream side) out of the positions P2 and P4 is temporarily set to a start position of the radio communication disrupted section A-22 (Fig. 4A).

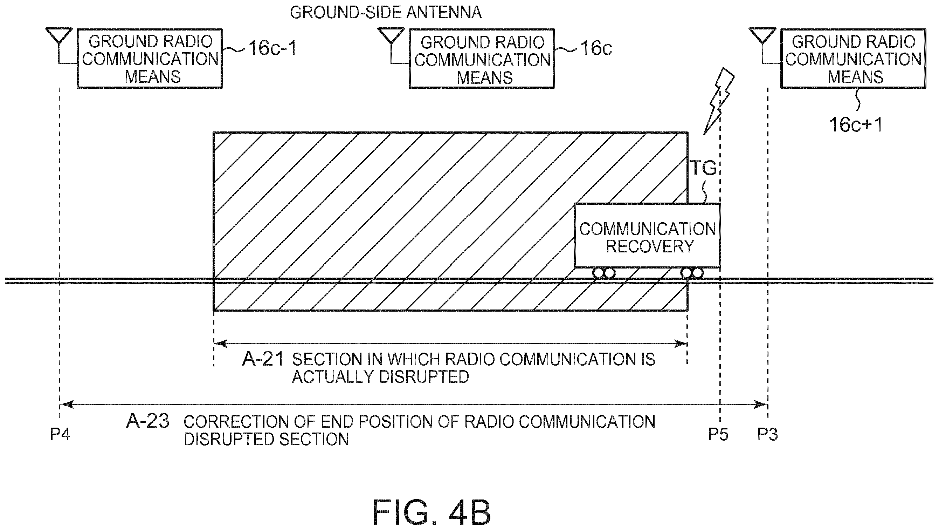

(Procedure 2) Next, when the train of which the radio communication is disrupted is evacuated, and when the radio communication is recovered, a leading position P5 of the train is extracted. When the leading position P5 is more rearward (upstream side) than the end position of the radio communication disrupted section A-22, the end position of the radio communication disrupted section is corrected to the position P5, to set a radio communication disrupted section A-23 (Fig. 4B). In addition, at this time, the deceleration distance A-12, the margin distance A-13, and so on are set, as described with reference to Fig. 3A, Fig. 3B, Fig. 3C.

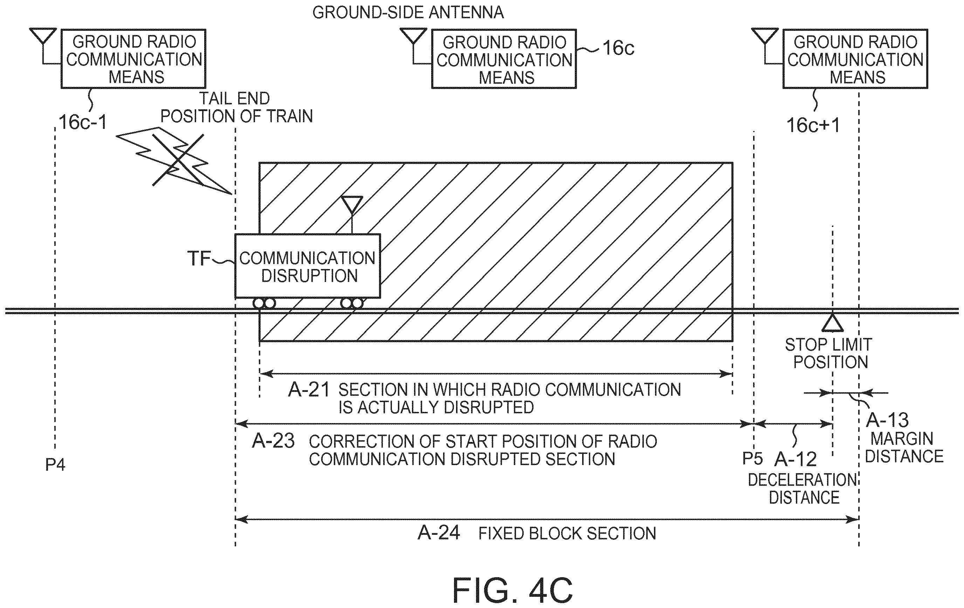

(Procedure 3) A fixed block section A-24 is set based on the radio communication disrupted section A-23 (Fig. 4C). In addition, when the first train TF enters the fixed block section A-24, and when the radio communication of the train is disrupted, a tail end position of the train is extracted. When the end position of the train is more forward (downstream side) than the start position of the radio communication disrupted section A-23, a start position of the radio communication disrupted section A-23 is corrected to this position, and a start position of the fixed block section A-24 is corrected as well.

When evacuating the train of which the radio communication is disrupted, the end position of the radio communication disrupted section may not be corrected in the procedure 2 in a case that the train is directly evacuated to a turnout or the like from the section in which the radio communication is disrupted. In this case, the leading position of the train, when the radio communication of the train TF entering the fixed block section at the first time is recovered, may be extracted and used to correct the end position of the radio communication disrupted section.

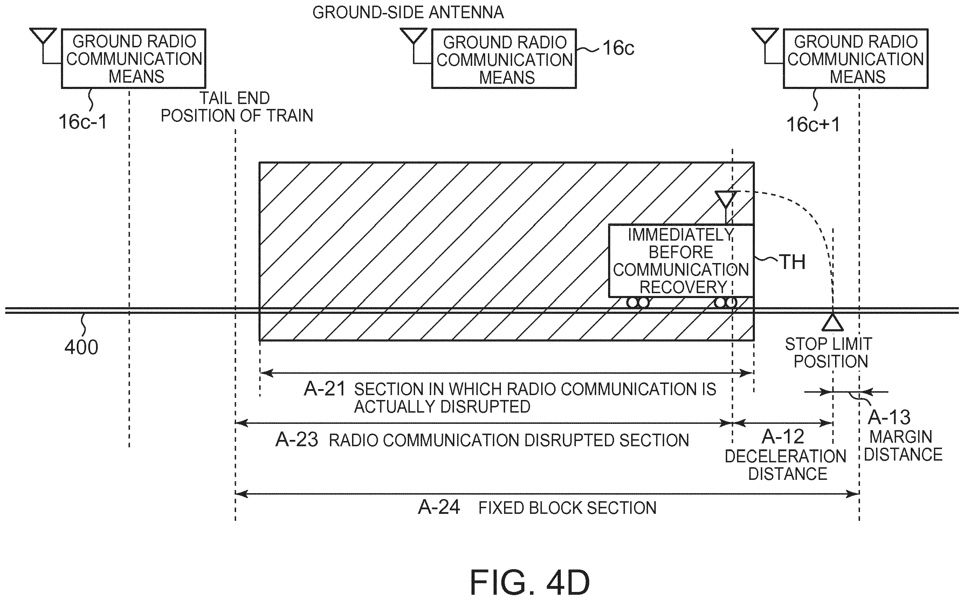

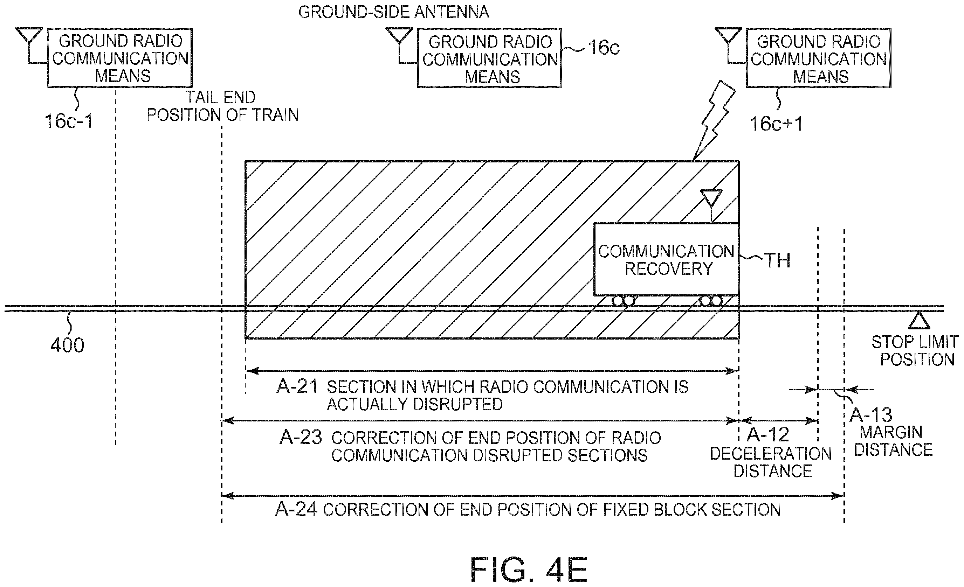

In this way, the start and end positions of the radio communication disrupted section can be automatically set. Even after the radio communication disrupted section is set, in a case where the position, at which the radio communication of the train TH has entered the fixed block section second or subsequently is recovered, is more forward (downstream side) than the end position of the radio communication disrupted section, the end position of the radio communication disrupted section may be corrected at each time, and the end position of the fixed block section may be corrected as well. Therefore, the situation that the radio communication is recovered after the brake is started in an attempt to stop in front of the end position of the fixed block section, the stop limit position is moved forward to thereby release the brake, and the ride comfort is worsened by the short brake (Fig. 4D) can be reduced (Fig. 4E). When the leading position P5 of the train or the like at the time of recovery of the radio communication is extracted, the extraction may be performed by further adding a safer distance in consideration of the radio fluctuation.

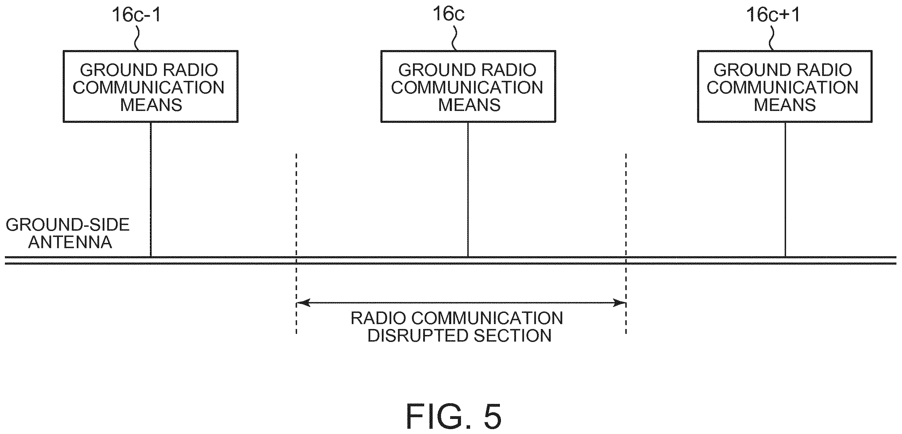

In the train control system, another procedure of automatically setting the start and end positions of the radio communication disrupted section will be described with reference to Fig. 5.

In the train control system, in a case where a leaky coaxial cable (LCX) is used in the antenna of the ground radio communication means, a radio communication enabled area of the ground radio communication means can be almost accurately specified. The radio communication enabled area is stored in a database or the like as the radio communication disrupted section when the ground radio communication means malfunctions.

In addition, in a case where a space wave antenna is used in the antenna of the ground radio communication means, a maximum radio disruption range at the time of antenna installation or the like is measured, and is stored in a database or the like as the radio communication disrupted section when the ground radio communication means malfunctions.

The radio communication disrupted section of the malfunctioned ground radio communication means can be read from the database or the like, and can be used.

In addition, a maintenance staff performs a radio wave measurement in advance using a monitoring device in the field, and can confirm and set the radio communication enabled area of each ground radio means. And the radio communication enabled area is stored in a database, and is managed by the ground control means. The ground control means maps the management range with various data (data such as the radio communication disrupted section, the fixed block section, the deceleration distance, the margin distance, the stop limit position).

A detection of a response signal from the ground radio means is performed by the ground control means that is in charge of managing the ground radio means. For example, in a case where, during the operation of the target train, a train identification number to be periodically received has not been detected (in a case where the radio communication is disrupted), the ground control means can determine that the ground radio means has malfunctioned. As described above, the start and end positions of the radio communication disrupted section can also be automatically set.

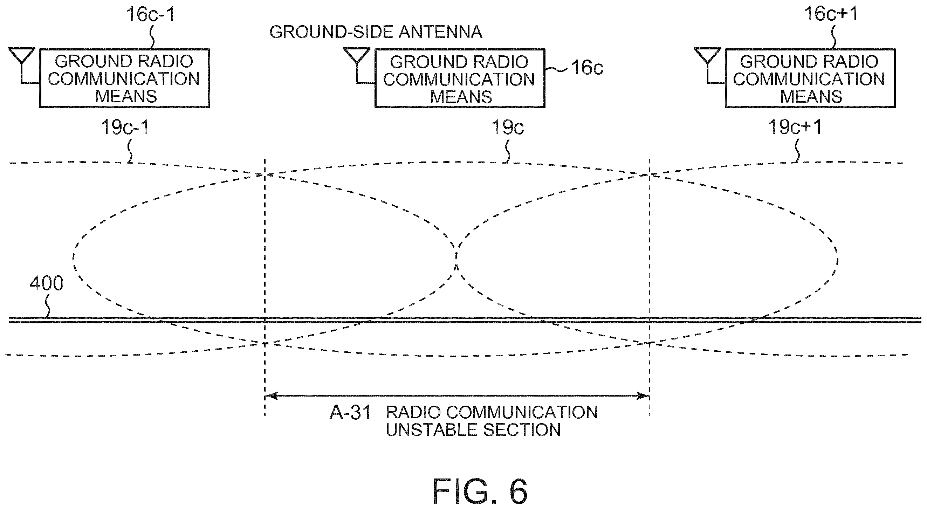

In the train control system, a modification can be provided, wherein the space wave antenna is used in the antenna of the ground radio communication system, and a boundary of the radio communication enabled area of each ground radio communication means reaches a boundary of the radio communication enabled area of two adjacent ground radio communication means, as illustrated in Fig. 6. That is, radio communication enabled areas 19c-1, 19c, 19c+1 are radio communication enabled areas of adjacent ground radio communication means 16c-1, 16c, 16c+1, 16c-1 respectively. The radio communication enabled areas 19c-1, 19c+1 are adjacent to each other, and a part of the radio communication enabled area 19c overlaps with a part of each of the radio communication enabled areas 19c-1, 19c+1.

In the case of this modification, even though one ground radio communication means malfunctions, since the train can perform radio communication with any of the adjacent ground radio communication means, the radio communication disrupted section does not occur.

However, since the distance between the antenna of the ground radio communication means and the train is increased, the radio communication may become unstable, and the radio communication may be intermittently disrupted according to the radio wave propagation situation.

Therefore, a section A-31 having the middle points of adjacent ground radio communication means as boundaries is stored in a database or the like, as a section in which the radio communication is unstable, in association with each ground radio communication means, for example. And, when the malfunctioned ground radio communication means is detected, the radio communication unstable section of the ground radio communication means is read from the database, and is set as the radio communication disrupted section. And as described above, it is possible to ensure the safety of the train operation even in the radio communication unstable section, by giving the position that is the margin distance short of the end position of the fixed block section, as the stop limit position, while the train resides in the radio communication disrupted section.

As described above, it is provided a train control system which is provided with the speed/position detection means to detect the position of the train on the train, the on-board radio communicatin means that transmits and receives information with the gronud side and the antenna thereof, the ground control means that performs conversion and lock of the point and detects the train positin and the route opening situation, to calculate the stop limit position of the train, and the on-board control means that controls a brake of the train not to exceed the stop limit position.

Here, the ground control means sets a section obtained by adding the distance necessary for stopping the train and the margin distance to the radio communication disrupted section, as the fixed block section, and transmits the fixed block section to the on-board control device. In addition, the ground control means sets the position rearward by the margin distance from the end of the fixed block section, for the train entering the fixed block section, as the stop limit position on the end side of the fixed block section, and holds the stop limit position till the radio communication is recovered. Further, the ground control means holds the tail end position of the train, when the radio communication is disrupted in a state in which all or part of the train is on rail in the fixed block section, till the radio communication is recovered, and can set a position rearward by the margin distance from a more rearward position, out of the position recognized as the tail end position by the ground control means and the start position of the fixed block section, for the subsequent train, as the stop limit position on the start side of the fixed block section.

In this waty, the situation setting of, such as the radio communication disrupted section, the fixed block section, the stop limit position, the tail end position is performed to the the train on rail, and the stop limit position information is provided to the train entering the fixed block section, and it becomes possible to perform continuous operation of trains.

On the other hand, the on-board control means is provided with the means that holds the stop limit position of the end side received just before entering the fixed block section set due to the disruption of the radio communication, while the radio communication is disrupted and all or part of the train resides in the fixed block section.

By this means, it is possible not to interrupt the operation of the train at the both side of the radio communication disrupted section, while securing the safety of the train by the vehicle control device.

Further, in the above-described train control system, the ground control means further compares, when the radio communication is disrupted, a leading position of a rearmost train among trains of a more downstream side than a train of which radio communication is disrupted, with an antenna installation position of ground radio communication means adjacent to a downstream side of a ground radio communication means of which radio communication is disrupted, and temporarily sets a more rearward position to an end position of a "radio communication disrupted section", and after the radio communication is disrupted, compares a tail end position of <the corresponding train> when a leading train among the trains of a more upstream side than the train of which the radio communication is disrupted is emergently stopped, with an antenna installation position of ground radio communication means adjacent to an upstream side of a ground radio communication means of which radio communication is disrupted, and temporarily sets a more forward <downstream > position to a start position of the "radio communication disrupted section". In addition it is possible to reset a leading position of a train at the time of recovery of the radio communication when the train of which the radio communication is disrupted is evacuated from the radio communication disrupted section, or a leading position of a train when the train enters the fixed block section at the first time after the evacuation of the train, and the radio communication of the train of which the radio communication is disrupted is recovered, as the end position of the "radio communication disrupted section". Further it is possible to reset a tail end position of a train when the radio communication of the train entering the fixed block section at the first time after the evacuation of the train is disrupted, as the start of the "radio communication disrupted section". By this means, it is possible to automatically determine the radio communication disrupted section, and automatically set the fixed block section.

Further, in the above described train control system the ground control means further corrects, when a leading position of a train when the radio communication of the train entering and exiting the "radio communication disrupted section" is recovered, is before the end of the "radio communication disrupted section", the end position of the "radio communication disrupted section" to the leading position of the train at the time of recovery of the radio communication. By this means, a possibility that a brake is operated in an attempt to stop the train in front of the end position of the fixed block section before the radio communication is recovered is reduced, and it is reduced that the ride comfort is worsened.

Further, in the above-described train control system, the ground control is further provided with means that stores the radio communication disrupted section when a ground radio base station malfunctions; and means that sets the radio communication disrupted section according to the malfunctioned radio base station.

By this means, it is possible to set the fixed block section, by only designating the malfunctioned radio base station. Further, in the above-described train control system, the ground radio communication means is disposed such that a boundary of a radio communication enabled area thereof partially overlaps with a radio communication enabled area of the adjacent ground radio communication means, and the ground control means is further provided with means that stores a radio communication unstable section when the ground radio communication means malfunctions, means that setsa radio communication unstable section that is read according to the malfunctioned ground radio communication means, as the radio communication disrupted section, and means that sets a position rearward by the margin distance from the end of the fixed block section, for a train entering the fixed block section, as the stop limit position, and holds the stop limit position until the train passes through the radio communication disrupted section. By this means, it is possible to ensure the safety of the operation of trains, even in the radio communication unstable section.

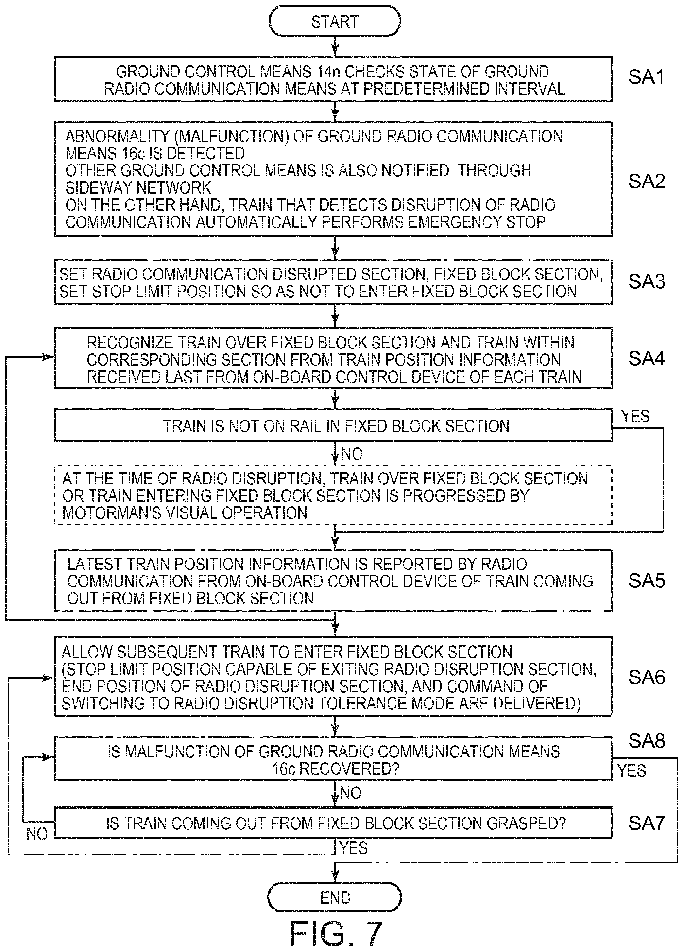

Fig. 7 illustrates a schematic processing procedure when the ground control means 14n detects the malfunction of the ground radio communication means 16c that is under management, for example,. The procedure is not necessarily limited to the order described herein.

First, in a normal state, in step SA1, the ground control means 14n checks the state of the ground radio communication means that is in jurisdiction at a predetermined interval (step SA1). Now, it is assumed that the abnormality (malfunction) of the ground radio means 16c is detected. At this time, the ground control means 14n transmits the malfunction of the ground radio means 16c even with respect to other ground control means, through the wayside network. On the other hand, the train that has detected the disruption of the radio communication automatically emergently stops (step SA2).

Subsequently, the ground control means 14n performs setting of a radio communication disrupted section, setting of a fixed block section, and setting of a stop limit position so as not to enter the fixed block section, on an image (map) of data seen from an active database tracking on-rail information or the like (step SA3). The setting state at this time has been described above with reference to Fig. 3A to Fig. 6.

In addition, the train entrering into the fixed block section and the train in the fixed block section are detected based on the latest train position information received from the on-board control device of each train (step SA4). In a case where the train resides in the fixed block section, the train entering into the fixed block section or the train that has entered the fixed block section already, at the time of radio disruption, is progressed by the motorman's visual operation.

Subsequently, the latest train position information is reported by radio communication from the on-board control device of the train coming out from the fixed block section (step SA5). After that, the procedure returns back to step SA4, and the train over the fixed block section and the train within the corresponding section are recognized. As a result, the ground control means 14n determines the presence or absence of another train that is on rail in the fixed block section. In a case where the train is not on rail in the fixed block section, an instruction is issued for a subsequent train to enter the fixed block section (in addition, the stop limit position capable of exiting the radio disruption section, the end position of the radio disruption section, and the command of switching to the radio disruption allowance mode may be delivered) (step SA6). Subsequently, it is checked whether or not the malfunction of the ground radio communication means 16c is recovered (step SA8). When the malfunction of the ground radio communication means 16c is recovered, the state is switched to a normal operation control state. When it is determined in step SA8 that the malfunction is not recovered, a train coming out from the fixed block section is waited for. An instruction to stop at the stop limit position of the start side of the fixed block section is issued to a subsequent train. When the train coming out from the fixed block section is grasped (step SA7: YES), the procedure returns back to step SA6 and a next waiting train is allowed to enter the fixed block section.

### DESCRIPTION OF THE SYMBOLS

220, TA, TB, TE, TF, TG, TH ... train, 222 ... on-board control means, 221 ... speed/position detection means, 223 ... on-board radio communication means, 14a, 14n ... ground control means, 16a, 16c, 16j ... ground radio communication means

## Claims

1. A train control system which performs radio communication between an on-board control device installed in a vehicle and a ground control device mounted on a ground, the train control system comprising:
fixed block section setting means that sets a section obtained by adding a safe deceleration control distance necessary for stopping, to a radio communication disrupted section (A-11) in which radio communication is disrupted at an end, as a fixed block section (A-14);
**characterized by**
stop limit position setting means that sets a position rearward (upstream side) by a margin distance (A-13) from an end of the fixed block section (A-14), for a train entering the fixed block section (A-14), as a stop limit position on the end side of the fixed block section (A-14); and
control means that controls the train, based on the fixed block section (A-14) and the stop limit position,
wherein the safe deceleration control distance is a distance obtained by adding a deceleration distance (A-12) necessary for stopping of the vehicle and the margin distance (A-13),
wherein the stop limit position setting means further sets, when the radio communication is disrupted in a state in which all or part of the train is on rail in the fixed block section (A-14), a position rearward (upstream side) by the margin distance from a more rearward (upstream side) position, out of a tail end position of the train and a start position of the fixed block section (A-14), for a subsequent train, as a stop limit position at a start side of the fixed block section (A-14).

2. The train control system according to Claim 1,
wherein the safe deceleration control distance is a distance obtained by adding a length of the vehicle and the margin distance.

3. The train control system according to Claim 1, further comprising:
on-board control means (222) that controls a brake of the train so as not to exceed the stop limit position; and
ground control means that performs a conversion or a lock of a point, and grasps a position of the train or a course opening situation, to calculate the stop limit position of the train.

4. The train control system according to Claim 3,
wherein:
speed/position detection means (221) that detects the position of the train, on-board radio communication means (223) that transmits and receives information with a ground side, an antenna thereof, and the on-board control means are provided on a vehicle side; and
ground radio communication means that transmits and receives information with the train, an antenna thereof, and the ground control means are provided on the ground side.

5. The train control system according to Claim 4, wherein the ground control means comprises:
means that transmits the fixed block section (A-14) set in the fixed block section setting means to the on-board control device; and
means that holds the stop limit position set by the limit position setting means until the radio communication is recovered.

6. The train control system according to Claim 5, wherein the on-board control means (222) comprises means that holds the stop limit position of the end side received when the radio communication is disrupted and immediately before entering the fixed block section (A-14), while the radio communication is disrupted in a state in which all or part of the train is on rail in the fixed block section (A-14).

7. The train control system according to Claim 5, wherein the ground control means further comprises:
means that, when the radio communication is disrupted, compares a leading position of a rearmost train among trains of a more downstream side than a train of which radio communication is disrupted, with an antenna installation position of a ground radio communication means adjacent to a downstream side of a ground radio communication means of which radio communication is disrupted, and temporarily sets a more rearward position (upstream side) to an end position of a "radio communication disrupted section";
means that, after the radio communication is disrupted, compares a tail end position when a leading train among the trains of a more upstream side than the train of which the radio communication is disrupted is emergently stopped, with an antenna installation position of ground radio communication means adjacent to an upstream side of ground radio communication means of which radio communication is disrupted, and temporarily sets a more forward (downstream side) position to a start position of the "radio communication disrupted section";
means that resets a leading position of a train at the time of recovery of the radio communication when the train of which the radio communication is disrupted is evacuated from the radio communication disrupted section, or a leading position of a train when the train enters the fixed block section (A-14) at the first time after the evacuation of the train, and the radio communication of the train of which the radio communication is disrupted is recovered, as the end position of the "radio communication disrupted section"; and
means that resets a tail end position of a train when the radio communication of the train entering the fixed block section (A-14) at the first time after the evacuation of the train is disrupted, as the start of the "radio communication disrupted section".

8. The train control system according to Claim 7, wherein the ground control means further comprises means that, when a leading position of a train when the radio communication of the train entering and exiting the "radio communication disrupted section" is recovered, is before (upstream side) the end of the "radio communication disrupted section", corrects the end position of the "radio communication disrupted section" to the leading position of the train at the time of recovery of the radio communication.

9. The train control system according to Claim 5, wherein the ground control means further comprises:
means that stores the radio communication disrupted section when a ground radio base station malfunctions; and
means that sets the radio communication disrupted section according to the malfunctioned radio base station.

10. The train control system according to Claim 5, wherein the ground radio communication means is disposed such that a boundary of a radio communication enabled area thereof partially overlaps with a radio communication enabled area of the adjacent ground radio communication means, and
the ground control means further comprises:
means that stores a radio communication unstable section when the ground radio communication means malfunctions;
means that sets a radio communication unstable section that is read according to the malfunctioned ground radio communication means, as the radio communication disrupted section; and
means that sets a position rearward (upstream side) by the margin distance from the end of the fixed block section, for a train entering the fixed block section (A-14), as the stop limit position, and holds the stop limit position until the train passes through the radio communication disrupted section.

11. The train control system according to Claim 6, wherein, when the train proceeds to the end of the radio communication disrupted section, and the radio communication is recovered, the ground control means controls the train, using the position of the train detected by the speed/position detection means (221), and the stop limit position calculated by the ground control device.

12. A train control method which performs radio communication between an on-board control device installed in a vehicle and a ground control device mounted on a ground, the train control method comprising:
setting a section obtained by adding a safe deceleration control distance necessary for stopping, to a radio communication disrupted section (A-11) in which radio communication is disrupted at an end, as a fixed block section (A-14);
**characterized by**
setting a position rearward (upstream side) by a margin distance (A-13) from an end of the fixed block section (A-14), for a train entering the fixed block section (A-14), as a stop limit position on the end side of the fixed block section (A-14),
wherein the safe deceleration control distance is a distance obtained by adding a deceleration distance (A-12) necessary for stopping of the vehicle and the margin distance (A-13),
wherein when the radio communication is disrupted in a state in which all or part of the train is on rail in the fixed block section (A-14), a position rearward (upstream side) by the margin distance from a more rearward (upstream side) position, out of a tail end position of the train and a start position of the fixed block section (A-14), is sets for a subsequent train, as a stop limit position on a start side of the fixed block section (A-14).

13. The train control method according to Claim 12, wherein the safe deceleration control distance is a
distance obtained by adding a length of the vehicle and the margin distance.

14. The train control method according to Claim 12, wherein when the train enters the fixed block section (A-14) and the radio communication is disrupted, till the redio communication is recovered, the train holds the stop limit position at the end side which has been set immediately before the communication disruption, and continues to travel.

15. The train control method according to Claim 12, wherein, when the train proceeds to the end of the radio communication disrupted section, and the radio communication is recovered, the train is controlled using the stop limit position calculated, based on the position of the train detected by the speed/position detection means (221) provided in the train, and a course opening situation.

16. The train control method according to Claim 12, wherein the set fixed block section and the stop limit position at the end side are transmitted from the ground control device to the on-board control device, and the train is controlled based on transmitted information.

## Patentansprüche

1. Zugsteuerungssystem, das eine Funkkommunikation zwischen einer bordeigenen Steuerungsvorrichtung, die in einem Fahrzeug installiert ist, und einer Bodensteuerungsvorrichtung, die auf einem Boden montiert ist, ausführt, das Zugsteuerungssystem umfassend:
ein fixiertes Blockabschnittseinstellungsmittel, das einen Abschnitt, der durch Addieren einer sicheren Abbremssteuerungsdistanz, die zum Stoppen notwendig ist, zu einem Funkkommunikationsunterbrechungsabschnitt (A-11), in dem eine Funkkommunikation an einem Ende unterbrochen ist, erhalten wird, als einen fixierten Blockabschnitt (A-14) einstellt; **gekennzeichnet durch**
ein Stoppgrenzpositionseinstellungsmittel, das eine um eine Spielraumdistanz (A-13) rückwärts eines Endes des fixierten Blockabschnitts (A-14) (stromaufwärts) liegende Position für einen Zug, der in den fixierten Blockabschnitt (A-14) eintritt, als eine Stoppgrenzposition an der Endseite des fixierten Blockabschnitts (A-14) einstellt; und
ein Steuerungsmittel, das den Zug basierend auf dem fixierten Blockabschnitt (A-14) und der Stoppbegrenzungsposition steuert,
wobei die sichere Abbremssteuerungsdistanz eine Distanz ist, die durch Addieren einer Abbremsdistanz (A-12), die zum Stoppen des Fahrzeugs notwendig ist, und der Spielraumdistanz (A-13) erhalten wird,
wobei das Stoppgrenzpositionseinstellungsmittel ferner, wenn die Funkkommunikation in einem Zustand unterbrochen wird, in dem der gesamte oder ein Teil des Zugs im fixierten Blockabschnitt (A-14) auf Schiene ist, eine von einer weiter rückwärts (stromaufwärts) liegenden Position um die Spielraumdistanz rückwärts (stromaufwärts) liegende Position, von einer Fahrzeugheckposition des Zugs und einer Startposition des fixierten Blockabschnitts (A-14), für einen nachfolgenden Zug als eine Stoppgrenzposition bei einer Startseite des fixierten Blockabschnitts (A-14) einstellt.

2. Zugsteuerungssystem nach Anspruch 1, wobei die sichere Abbremssteuerungsdistanz eine Distanz ist, die durch Addieren einer Länge des Fahrzeugs und der Spielraumdistanz erhalten wird.

3. Zugsteuerungssystem nach Anspruch 1, ferner umfassend:
ein bordeigenes Steuerungsmittel (222), das eine Bremse des Zugs steuert, um die Stoppbegrenzungsposition nicht zu überschreiten; und
ein Bodensteuerungsmittel, das eine Umrechnung oder eine Sperre eines Punkts ausführt und eine Position des Zugs oder eine Kursöffnungssituation erfasst, um die Stoppgrenzposition des Zugs zu berechnen.

4. Zugsteuerungssystem nach Anspruch 3, wobei:
ein Geschwindigkeits-/Positionserfassungsmittel (221), das die Position des Zugs erfasst, ein bordeigenes Funkkommunikationsmittel (223), das Informationen mit einer Bodenseite sendet und empfängt, eine Antenne davon und das bordeigenen Steuerungsmittel an einer Fahrzeugseite bereitgestellt sind; und
ein Bodenfunkkommunikationsmittel, das Informationen zu/von dem Zug sendet und empfängt, eine Antenne davon und das Bodensteuerungsmittel an der Bodenseite bereitgestellt sind.

5. Zugsteuerungssystem nach Anspruch 4, wobei das Bodensteuerungsmittel umfasst:
ein Mittel, das den fixierten Blockabschnitt (A-14), der in den fixierten Blockabschnittseinstellungsmitteln eingestellt ist, zu der bordeigenen Steuerungsvorrichtung sendet; und
ein Mittel, das die Stoppgrenzposition, die durch das Grenzpositionseinstellungsmittel eingestellt ist, hält, bis die Funkkommunikation wiederhergestellt ist.

6. Zugsteuerungssystem nach Anspruch 5, wobei das bordeigenen Steuerungsmittel (222) ein Mittel umfasst, das die Stoppgrenzposition der Endseite, die empfangen wird, wenn die Funkkommunikation unterbrochen ist und unmittelbar vor einem Eintritt in den fixierten Blockabschnitt (A-14), hält, während die Funkkommunikation in einem Zustand unterbrochen ist, in dem der gesamte oder ein Teil des Zugs im fixierten Blockabschnitt (A-14) auf Schiene ist.

7. Zugsteuerungssystem nach Anspruch 5, wobei das Bodensteuerungsmittel ferner umfasst:
ein Mittel, das, wenn die Funkkommunikation unterbrochen ist, eine Führungsposition eines hintersten Zugs unter Zügen einer weiter stromabwärts liegenden Seite als ein Zug, dessen Funkkommunikation unterbrochen ist, mit einer Antenneninstallationsposition eines Bodenfunkkommunikationsmittels, das an eine stromabwärts liegende Seite eines Bodenfunkkommunikationsmittels, dessen Funkkommunikation unterbrochen ist, angrenzt, vergleicht und vorübergehend eine weiter rückwärts (stromaufwärts) liegende Position zu einer Endposition eines "Funkkommunikationsunterbrechungsabschnitts" einstellt;
ein Mittel, das, nachdem die Funkkommunikation unterbrochen wurde, eine Fahrzeugheckposition, wenn ein führender Zug unter den Zügen einer weiter stromaufwärts liegende Seite als der Zug, dessen Funkkommunikation unterbrochen ist, einen Notstopp ausführt, mit einer
Antenneninstallationsposition eines Bodenfunkkommunikationsmittels, die an eine stromaufwärts liegende Seite des Bodenfunkkommunikationsmittels angrenzt, dessen Funkkommunikation unterbrochen ist, vergleicht und vorübergehend eine weiter vorwärts (stromabwärts) liegende Position zu einer Startposition des "Funkkommunikationsunterbrechungsabschnitts" einstellt;
ein Mittel, das eine Führungsposition eines Zugs zum Zeitpunkt einer Wiederherstellung der Funkkommunikation, wenn der Zug, dessen Funkkommunikation unterbrochen ist, den
Funkkommunikationsunterbrechungsabschnitt räumt, oder eine Führungsposition eines Zugs, wenn der Zug das erste Mal nach Räumen des Zugs in den fixierten Blockabschnitt (A-14) eintritt und die Funkkommunikation des Zugs, dessen Funkkommunikation unterbrochen ist, wiederhergestellt ist, als die Endposition des "Funkkommunikationsunterbrechungsabschnitts" zurücksetzt; und
ein Mittel, das eine Fahrzeugheckposition eines Zugs, wenn die Funkkommunikation des Zugs, der nach Räumen des Zugs in den fixierten Blockabschnitt (A-14) eintritt, das erste Mal unterbrochen wird, als den Start des "Funkkommunikationsunterbrechungsabschnitts" zurücksetzt.

8. Zugsteuerungssystem nach Anspruch 7, wobei das Bodensteuerungsmittel ferner Mittel umfasst, die, wenn eine Führungsposition eines Zugs, wenn die Funkkommunikation des Zugs, der in den
"Funkkommunikationsunterbrechungsabschnitt" eintritt oder diesen verlässt, wiederhergestellt ist, vor dem (stromaufwärts des) Ende(s) des "Funkkommunikationsunterbrechungsabschnitts" ist, die Endposition des "Funkkommunikationsunterbrechungsabschnitts" zum Zeitpunkt der Wiederherstellung der Funkkommunikation zu der Führungsposition des Zugs korrigieren.

9. Zugsteuerungssystem nach Anspruch 5, wobei das Bodensteuerungsmittel ferner umfasst:
ein Mittel, das den Funkkommunikationsunterbrechungsabschnitt speichert, wenn eine Bodenfunkbasisstation fehlfunktioniert; und
ein Mittel, das den Funkkommunikationsunterbrechungsabschnitt gemäß der fehlfunktionierenden Funkbasisstation einstellt.

10. Zugsteuerungssystem nach Anspruch 5, wobei das
Bodenfunkkommunikationsmittel so angeordnet sind, dass eine Grenze eines Areals, in dem eine Funkkommunikation möglich ist, teilweise mit einem Areal, in dem eine Funkkommunikation möglich ist, des angrenzenden Bodenfunkkommunikationsmittels überlappt, und
das Bodensteuerungsmittel ferner umfasst:
ein Mittel, das einen Funkkommunikationsinstabilitätsabschnitt speichert, wenn das Funkkommunikationsmittel fehlfunktioniert;
ein Mittel, das einen Funkkommunikationsinstabilitätsabschnitt, der gemäß der fehlfunktionierenden Bodenfunkkommunikationsmittel gelesen wird, als den Funkkommunikationsunterbrechungsabschnitt einstellt; und
Ein Mittel, das eine Position um die Spielraumdistanz vom Ende des fixierten Blockabschnitts rückwärts (stromaufwärts) für einen Zug, der in den fixierten Blockabschnitt (A-14) eintritt, als die Stoppgrenzposition einstellt und die Stoppgrenzposition hält, bis der Zug durch den Funkkommunikationsunterbrechungsabschnitt durchfährt.

11. Zugsteuerungssystem nach Anspruch 6, wobei, wenn der Zug bis zum Ende des Funkkommunikationsunterbrechungsabschnitts weiterfährt und die Funkkommunikation wiederhergestellt ist, das Bodensteuerungsmittel den Zug unter Verwendung der Position des Zugs, die durch das Geschwindigkeits-/Positionserfassungsmittel (221) erfasst wird, und der Stoppgrenzposition, die durch die Bodensteuerungsvorrichtung berechnet wird, steuert.

12. Zugsteuerungsverfahren, das eine Funkkommunikation zwischen einer bordeigenen Steuerungsvorrichtung, die in einem Fahrzeug installiert ist, und einer Bodensteuerungsvorrichtung, die auf einem Boden montiert ist, ausführt, das Zugsteuerungsverfahren umfassend:
Einstellen eines Abschnitts, der durch Addieren einer sicheren Abbremssteuerungsdistanz, die zum Stoppen notwendig ist, zu einem Funkkommunikationsunterbrechungsabschnitt (A-11), in dem eine Funkkommunikation an einem Ende unterbrochen ist, erhalten wird, als einen fixierten Blockabschnitt (A-14);
**gekennzeichnet durch**
Einstellen einer um eine Spielraumdistanz (A-13) von einem Ende des fixierten Blockabschnitts (A-14) rückwärts (stromaufwärts) liegenden Position für einen Zug, der in den fixierten Blockabschnitt (A-14) eintritt, als eine Stoppgrenzposition an der Endseite des fixierten Blockabschnitts (A-14),
wobei die sichere Abbremssteuerungsdistanz eine Distanz ist, die durch Addieren einer Abbremsdistanz (A-12), die zum Stoppen des Fahrzeugs notwendig ist, und der Spielraumdistanz (A-13) erhalten wird,
wobei, wenn die Funkkommunikation in einem Zustand unterbrochen wird, in dem der gesamte oder ein Teil des Zugs im fixierten Blockabschnitt (A-14) auf Schiene ist, eine von einer weiter rückwärts (stromaufwärts) liegenden Position um die Spielraumdistanz rückwärts (stromaufwärts) liegende Position, von einer Fahrzeugheckposition des Zugs und einer Startposition des fixierten Blockabschnitts (A-14), für einen nachfolgenden Zug als eine Stoppgrenzposition bei einer Startseite des fixierten Blockabschnitts (A-14) eingestellt wird.

13. Zugsteuerungsverfahren nach Anspruch 12, wobei die sichere Abbremssteuerungsdistanz eine Distanz ist, die durch Addieren einer Länge des Fahrzeugs und der Spielraumdistanz erhalten wird.

14. Zugsteuerungsverfahren nach Anspruch 12, wobei, wenn der Zug in den fixierten Blockabschnitt (A-14) eintritt und die Funkkommunikation unterbrochen ist, der Zug, bis die Funkkommunikation wiederhergestellt ist, die Stoppgrenzposition an der Endseite hält, die unmittelbar vor der Kommunikationsunterbrechung eingestellt wurde, und die Reise fortsetzt.

15. Zugsteuerungsverfahren nach Anspruch 12, wobei, wenn der Zug zum Ende des Funkkommunikationsunterbrechungsabschnitts weiterfährt und die Funkkommunikation wiederhergestellt ist, der Zug unter Verwendung der Stoppgrenzposition, die basierend auf der Position des Zugs berechnet wird, die durch das im Zug bereitgestellten Geschwindigkeits-/Positionserfassungsmittel (221) erfasst wird, und einer Kursöffnungssituation gesteuert wird.

16. Zugsteuerungsverfahren nach Anspruch 12, wobei der eingestellte fixierte Blockabschnitt und die Stoppgrenzposition an der Endseite von der Bodensteuerungsvorrichtung an die bordeigene Steuerungsvorrichtung gesendet werden und der Zug basierend auf gesendeten Informationen gesteuert wird.

## Revendications

1. Système de commande de train qui effectue une communication radio entre un dispositif de commande à bord installé dans un véhicule et un dispositif de commande au sol monté au sol, le système de commande de train comprenant :
des moyens de réglage de section de bloc fixe qui règlent une section obtenue en ajoutant une distance de commande de décélération de sécurité nécessaire pour l'arrêt, à une section de communication radio perturbée (A-11) dans laquelle une communication radio est perturbée à une fin, en tant que section de bloc fixe (A-14) ;
**caractérisé par**
des moyens de réglage de position de limite d'arrêt qui règlent une position vers l'arrière (côté en amont) d'une distance de marge (A-13) à partir d'une fin de la section de bloc fixe (A-14), pour un train entrant dans la section de bloc fixe (A-14), en tant qu'une position de limite d'arrêt sur le côté de fin de la section de bloc fixe (A-14) ; et
des moyens de commande qui commandent le train, sur la base de la section de bloc fixe (A-14) et de la position de limite d'arrêt,
dans lequel la distance de commande de décélération de sécurité est une distance obtenue en ajoutant une distance de décélération (A-12) nécessaire pour l'arrêt du véhicule et la distance de marge (A-13),
dans lequel les moyens de réglage de position de limite d'arrêt règlent en outre, lorsque la communication radio est perturbée dans un état dans lequel l'intégralité ou une partie du train est sur les rails dans la section de bloc fixe (A-14), une position vers l'arrière (côté en amont) de la distance de marge à partir d'une position plus vers l'arrière (côté en amont), parmi une position de fin arrière du train et une position de début de la section de bloc fixe (A-14), pour un train suivant, en tant qu'une position de limite d'arrêt à un côté de début de la section de bloc fixe (A-14).

2. Système de commande de train selon la revendication 1, dans lequel la distance de commande de décélération de sécurité est une distance obtenue en ajoutant une longueur du véhicule et la distance de marge.

3. Système de commande de train selon la revendication 1, comprenant en outre :
des moyens de commande à bord (222) qui commandent un frein du train de manière à ne pas dépasser la position de limite d'arrêt ; et
des moyens de commande au sol qui effectuent une conversion ou un verrouillage d'un point, et qui prennent une position du train ou une situation d'ouverture de parcours, pour calculer la position de limite d'arrêt du train.

4. Système de commande de train selon la revendication 3, dans lequel :
des moyens de détection de vitesse/position (221) qui détectent la position du train, des moyens de communication radio à bord (223) qui transmettent et reçoivent des informations avec un côté au sol, une antenne de ceux-ci, et les moyens de commande à bord sont prévus sur un côté de véhicule ; et
des moyens de communication radio au sol qui transmettent et reçoivent des informations avec le train, une antenne de ceux-ci, et les moyens de commande au sol sont prévus sur le côté au sol.

5. Système de commande de train selon la revendication 4, dans lequel les moyens de commande au sol comprennent :
des moyens qui transmettent la section de bloc fixe (A-14) réglée dans les moyens de réglage de section de bloc fixe à destination du dispositif de commande à bord ; et
des moyens qui maintiennent la position de limites d'arrêt réglée par les moyens de réglage de position de limite jusqu'au rétablissement de la communication radio.

6. Système de commande de train selon la revendication 5, dans lequel les moyens de commande à bord (222) comprennent des moyens qui maintiennent la position de limite d'arrêt du côté de fin reçue lorsque la communication radio est perturbée et immédiatement avant l'entrée dans la section de bloc fixe (A-14), pendant que la communication radio est perturbée dans un état dans lequel l'intégralité ou une partie du train est sur les rails dans la section de bloc fixe (A-14).

7. Système de commande de train selon la revendication 5, dans lequel les moyens de commande au sol comprennent en outre :
des moyens qui, lorsque la communication radio est perturbée, comparent une position avant d'un train le plus à l'arrière parmi des trains d'un côté plus en aval qu'un train dont la communication radio est perturbée, à une position d'installation d'antenne d'un moyen de communication radio au sol adjacent à un côté en aval d'un moyen de communication radio au sol dont la communication radio est perturbée, et règlent provisoirement une position plus vers l'arrière (côté en amont) à une position de fin d'une « section de communication radio perturbée » ;
des moyens qui, après que la communication radio est perturbée, comparent une position de fin arrière lorsqu'un train avant parmi les trains d'un côté plus en amont que le train dont la communication radio est perturbée est arrêté d'urgence, à une position d'installation d'antenne de moyens de communication radio au sol adjacents à un côté en amont de moyens de communication radio au sol dont la communication radio est perturbée, et règlent provisoirement un côté plus vers l'avant (côté en aval) à une position de début de la « section de communication radio perturbée » ;
des moyens qui réinitialisent une position avant d'un train au moment du rétablissement de la communication radio lorsque le train dont la communication radio est perturbée est évacué de la section de communication radio perturbée, ou une position avant d'un train lorsque le train entre dans la section de bloc fixe (A-14) au premier moment après l'évacuation du train, et la communication radio du train dont la communication radio est perturbée est rétablie, en tant que la position de fin de la « section de communication radio perturbée » ; et
des moyens qui réinitialisent une position de fin arrière d'un train lorsque la communication radio du train entrant dans la section de bloc fixe (A-14) au premier moment après l'évacuation du train est perturbée, en tant que le début de la « section de communication radio perturbée ».

8. Système de commande de train selon la revendication 7, dans lequel les moyens de commande au sol comprennent en outre des moyens qui, lorsqu'une position avant d'un train lorsque la communication radio du train entrant et sortant de la « section de communication radio perturbée » est rétablie, est avant (côté en amont) la fin de la « section de communication radio perturbée », corrigent la position de fin de la « section de communication radio perturbée » à la position avant du train au moment du rétablissement de la communication radio.

9. Système de commande de train selon la revendication 5, dans lequel les moyens de commande au sol comprennent en outre :
des moyens qui mémorisent la section de communication radio perturbée lors d'un dysfonctionnement d'une station de base radio au sol ; et
des moyens qui règlent la section de communication radio perturbée en fonction de la station de base radio présentant un dysfonctionnement.

10. Système de commande de train selon la revendication 5, dans lequel les moyens de communication radio au sol sont disposés de sorte qu'une frontière d'une zone de communication radio activée de ceux-ci chevauche partiellement une zone de communication radio activée des moyens de communication radio au sol adjacents, et
les moyens de commande au sol comprennent en outre :
des moyens qui mémorisent une section de communication radio instable lors d'un dysfonctionnement des moyens de communication radio au sol ;
des moyens qui règlent une section de communication radio instable qui est lue en fonction des moyens de communication radio au sol présentant un dysfonctionnement, en tant que la section de communication radio perturbée ; et
des moyens qui règlent une position vers l'arrière (côté en amont) de la distance de marge à partir de la fin de la section de bloc fixe, pour un train entrant dans la section de bloc fixe (A-14), en tant que la position de limite d'arrêt, et maintiennent la position de limite d'arrêt jusqu'à ce que le train traverse la section de communication radio perturbée.

11. Système de commande de train selon la revendication 6, dans lequel, lorsque le train atteint la fin de la section de communication radio perturbée, et la communication radio est rétablie, les moyens de commande au sol commandent le train, en utilisant la position du train détectée par les moyens de détection de vitesse/position (221), et la position de limite d'arrêt calculée par le dispositif de commande au sol.

12. Procédé de commande de train qui effectue une communication radio entre un dispositif de commande à bord installé dans un véhicule et un dispositif de commande au sol monté au sol, le procédé de commande de train comprenant :
le réglage d'une section obtenue en ajoutant une distance de commande de décélération de sécurité nécessaire pour l'arrêt, à une section de communication radio perturbée (A-11) dans laquelle une communication radio est perturbée à une fin, en tant que section de bloc fixe (A-14) ;
**caractérisé par**
le réglage d'une position vers l'arrière (côté en amont) d'une distance de marge (A-13) à partir d'une fin de la section de bloc fixe (A-14), pour un train entrant dans la section de bloc fixe (A-14), en tant qu'une position de limite d'arrêt sur le côté de fin de la section de bloc fixe (A-14) ;
dans lequel la distance de commande de décélération de sécurité est une distance obtenue en ajoutant une distance de décélération (A-12) nécessaire pour l'arrêt du véhicule et la distance de marge (A-13),
dans lequel, lorsque la communication radio est perturbée dans un état dans lequel l'intégralité ou une partie du train est sur les rails dans la section de bloc fixe (A-14), une position vers l'arrière (côté en amont) de la distance de marge à partir d'une position plus vers l'arrière (côté en amont), parmi une position de fin arrière du train et une position de début de la section de bloc fixe (A-14), est réglée pour un train suivant, en tant qu'une position de limite d'arrêt à un côté de début de la section de bloc fixe (A-14).

13. Procédé de commande de train selon la revendication 12, dans lequel la distance de commande de décélération de sécurité est une distance obtenue en ajoutant une longueur du véhicule et la distance de marge.

14. Procédé de commande de train selon la revendication 12, dans lequel, lorsque le train entre dans la section de bloc fixe (A-14) et la communication radio est perturbée, jusqu'au rétablissement de la communication radio, le train maintient la position de limite d'arrêt au côté de fin qui a été réglée immédiatement avant la perturbation de communication, et continue de se déplacer.

15. Procédé de commande de train selon la revendication 12, dans lequel, lorsque le train atteint la fin de la section de communication radio perturbée, et la communication radio est rétablie, le train est commandé en utilisant la position de limite d'arrêt calculée, sur la base de la position du train détectée par les moyens de détection de vitesse/position (221) prévus dans le train, et une situation d'ouverture de parcours.

16. Procédé de commande de train selon la revendication 12, dans lequel la section de bloc fixe réglée et la position de limite d'arrêt au côté de fin sont transmises du dispositif de commande au sol au dispositif de commande à bord, et le train est commandé sur la base des informations transmises.
